# EUROPÄISCHE PATENTSCHRIFT

(11) **EP 2 645 624 B1**
(45) Veröffentlichungstag und Bekanntmachung des Hinweises auf die Patenterteilung: **15.10.2014**
(21) Anmeldenummer: 12162052.0
(22) Anmeldetag: 29.03.2012
(51) Int. Cl.: H04L 12/24, H04L 12/40, H04L 12/437

(54) **Schaltgerät, redundant betreibbares industrielles Kommunikationsnetz und Verfahren zum Betrieb eines Kommunikationsnetzes**
Switching device, redundant industrial communication network, and method for operating a communication network
Appareil de connexion, redondant réseau de communication industriel, et procédé d' opération ledit réseau de communication

(43) Veröffentlichungstag der Anmeldung: 02.10.2013
(73) Patentinhaber: Siemens Aktiengesellschaft, 80333 München (DE)
(72) Erfinder: Kasper, Michael, 90411 Nürnberg (DE); Lasarzewski, Johannes, 76187 Karlsruhe (DE); Wagner, Michael, 76764 Rheinzabern (DE)

(56) Entgegenhaltungen:
- DE-A1- 19 810 587
- DE-A1-102007 044 820
- DE-A1-102010 029 300
- US-A1- 2006 293 190

## Beschreibung

In verteilten industriellen Automatisierungssystemen ist bei einer Erfassung, Auswertung und Übermittlung von Meß- und Steuerungsdaten ist sicherzustellen, daß vollständige und unveränderte Daten insbesondere bei zeitkritischen industriellen Produktionsprozessen in Echtzeit vorliegen. Absichtliche, unabsichtliche oder durch einen technischen Fehler bedingte Veränderungen sind zu vermeiden, da dies innerhalb eines industriellen Automatisierungssystems zu inkonsistenten Systemzuständen und Systemausfällen mit wirtschaftlich gravierenden Stillstandszeiten führen kann.

Zusätzlich können Unterbrechungen von Kommunikationsverbindungen zwischen Rechnereinheiten eines industriellen Automatisierungssystems zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle, wie Media Redundancy Protocol, High-availability Seamless Redundancy oder Parallel Redundancy Protocol, für hochverfügbare, redundant betreibbare in industriellen Kommunikationsnetze entwickelt worden. Media Redundancy Protocol (MSR) ist im Standard IEC 62439 definiert und ermöglicht eine Kompensation einzelner Verbindungsausfälle in Netzwerken mit einfacher Ringtopologie. Entsprechend Media Redundancy Protocol ist einem Switch mit zwei Ports innerhalb der Ringtopologie ein Redundanz-Manager zugeordnet, der das Netzwerk auf Verbindungsausfälle überwacht und ggf. eine Schaltmaßnahme für einen Ringschluß einleitet. In normalen Betriebszustand prüft der Redundanz-Manager anhand von Test-Datenpaketen, ob innerhalb der Ringtopologie eine Unterbrechung aufgetreten ist. Datenpakete mit Nutzdaten leitet der dem Redundanz-Manager zugeordnet Switch normalerweise jedoch nicht von einem Port an den anderen Port weiter. Somit wird verhindert, daß Datenpakete mit Nutzdaten permanent innerhalb der Ringtopologie zirkulieren. Fällt innerhalb der Ringtopologie ein Switch oder eine Verbindung aus, werden von einem Port ausgesendeten Test-Datenpakete nicht mehr am jeweils anderen Port empfangen. Anhand dessen kann der Redundanz-Manager einen Ausfall erkennen und leitet bei einem Ausfall Datenpakete mit Nutzdaten im Unterschied zum normalen Betriebszustand von einem Port an den anderen Port und umgekehrt weiter. Darüber hinaus veranlaßt der Redundanz-Manager eine Benachrichtigung der übrigen Switches über eine Ausfall-bedingte Topologieänderung. Auf diese Weise wird vermieden, daß Datenpakete über die ausgefallene Verbindung übermittelt werden.

High-availability Seamless Redundancy (HSR) und Parallel Redundancy Protocol (PRP) sind im Standard IEC 62439-3 definiert und ermöglichen eine stoßfreie redundante Übertragung von Datenpaketen mit äußerst geringen Erholungszeiten. Entsprechend High-availability Seamless Redundancy und Parallel Redundancy Protocol wird jedes Datenpaket von einer sendenden Kommunikationsgerät dupliziert und auf zwei verschiedenen Wegen zu einem Empfänger geschickt. Durch ein empfängerseitiges Kommunikationsgerät werden Duplikate darstellende redundante Datenpakete aus einem empfangenen Datenstrom ausgefiltert.

In US 5,414,708 ist eine Anordnung beschrieben, bei der an einen Repeater Uplink- und Downlink-seitig ein erster und ein zweiter Bypass-Schaltkreis angeschlossen ist, durch die der Repeater überbrückbar ist. Die beiden Bypass-Schaltkreise sind über einen Sende- und einen Empfangsschaltkreis miteinander verbunden. In entsprechender Weise sind die beiden Bypass-Schaltkreise über jeweils einen Sende- und einen Empfangsschaltkreis Uplink- bzw. Downlink-seitig mit dem Repeater verbunden. Darüber hinaus ist der Repeater über eine Ethernet-basierte Schnittstelle mit einer Datenverarbeitungseinrichtung verbunden. Von der Datenverarbeitungseinrichtung über die Ethernet-basierte Schnittstelle an den Repeater übermittelte Datenpakete werden durch diesen an den ersten und zweiten Bypass-Schaltkreis weitergeleitet. Sobald die Datenverarbeitungseinrichtung den Repeater über die Ethernet-basierte Schnittstelle nicht mehr mit Energie versorgt, wird der Repeater durch den ersten und den zweiten Bypass-Schaltkreis überbrückt.

Aus US 2007/0025240 A1 ist ein Ethernet-Netzwerk bekannt, bei dem zumindest drei Switches in einer Linientopologie miteinander verbunden sind und zumindest einem ausgewählten Switch ein Bypass-Switch zugeordnet ist. Ist der ausgewählte Switch außer Betrieb, verbindet der Bypass-Switch die beiden anderen Switches miteinander unter Umgehung des ausgewählten Switchs. Auch den beiden anderen Switches bzw. sämtlichen Switches kann jeweils ein eigener Bypass-Switch zugeordnet sein. Darüber hinaus kann ein Bypass-Switch unmittelbar in einen Switch integriert sein.

In Netzwerken mit Ringtopologie und Redundanz-Manager sind aus US 5,414,708 und US 2007/0025240 A1 bekannte Bypass-Lösungen problematisch, da ein Wiederzuschalten eines zuvor mittels einer Bypass-Schaltung abgeschalteten Switchs und dessen Re-Initialisierung innerhalb der Ringtopologie im Sekundenbereich vergleichsweise viel Zeit beansprucht. Dies wird vom Redundanz-Manager bereits als Netzwerkunterbrechung interpretiert. Dementsprechend wird der Redundanz-Manager aktiv und veranlaßt eine Fehlermeldung.

In DE102010029300 A1 ist ein Überbrückungs-Koppelement in einer ringförmigen Netzwerktopologie beschrieben, welches dazu ausgelegt ist, einen angeschlossenen Netzknoten im Falle einer Fehlfunktion abzukoppeln und den Ring durch das Schalten in einen Überbrückungs-Modus zu schließen.

Der vorliegenden Erfindung liegt die Aufgabe zugrunde, eine Vorrichtung und ein Verfahren zur stoßfreien Zuschaltung eines zuvor mittels einer Bypass-Schaltung von einem industriellen Kommunikationsnetz mit Ringtopologie und Redundanzbehandlung getrennten Kommunikationsgeräts anzugeben.

Diese Aufgabe wird erfindungsgemäß durch ein Schaltgerät mit den in Anspruch 1 angegebenen Merkmalen und durch ein redundant betreibbares industrielles Kommunikationsnetz mit den in Anspruch 9 angegebenen Merkmalen gelöst. Vorteilhafte Weiterbildungen der vorliegenden Erfindung sind in den abhängigen Ansprüchen angegeben.

Das erfindungsgemäße Schaltgerät für ein ausgewähltes Kommunikationsgerät eines redundant betreibbaren industriellen Kommunikationsnetzes umfaßt zumindest vier Anschlußpaare und vier Schaltelemente, durch die Anschlüsse abhängig von einem Schaltgerätzustand verbunden sind. Das ausgewählte Kommunikationsgerät umfaßt zumindest eine erste und zweite Sende- und Empfangseinheit sowie ein Koppelelement und kann beispielsweise ein Switch sein. Ein erstes Anschlußpaar des erfindungsgemäßen Schaltgeräts ist über eine erste Netzwerkverbindung mit einer Sende- und Empfangseinheit eines ersten weiteren Kommunikationsgeräts verbindbar. Dabei ist ein erster Anschluß des ersten Anschlußpaars mit der Sendeeinheit des ersten weiteren Kommunikationsgeräts verbindbar, während ein zweiter Anschluß des ersten Anschlußpaars mit der Empfangseinheit des ersten weiteren Kommunikationsgeräts verbindbar ist. Ein zweites Anschlußpaar ist über eine zweite Netzwerkverbindung mit einer Sende- und Empfangseinheit eines zweiten weiteren Kommunikationsgeräts verbindbar. Dabei ist ein erster Anschluß des zweiten Anschlußpaars mit der Sendeeinheit des zweiten weiteren Kommunikationsgeräts verbindbar, während ein zweiter Anschluß des zweiten Anschlußpaars mit der Empfangseinheit des zweiten weiteren Kommunikationsgeräts verbindbar ist. Das erste bzw. zweite weitere Kommunikationsgerät kann beispielsweise ebenfalls ein Switch sein.

Ein drittes Anschlußpaar des erfindungsgemäßen Schaltgeräts ist über eine dritte Netzwerkverbindung mit der ersten Sende- und Empfangseinheit des ausgewählten Kommunikationsgeräts verbindbar. Dabei ist ein erster Anschluß des dritten Anschlußpaars mit der ersten Sendeeinheit des ausgewählten Kommunikationsgeräts verbindbar, während ein zweiter Anschluß des dritten Anschlußpaars mit der ersten Empfangseinheit des ausgewählten Kommunikationsgeräts verbindbar ist. Ein viertes Anschlußpaar ist über eine vierte Netzwerkverbindung mit der zweiten Sende- und Empfangseinheit des ausgewählten Kommunikationsgeräts verbindbar. Dabei ist ein erster Anschluß des vierten Anschlußpaars mit der zweiten Sendeeinheit des ausgewählten Kommunikationsgeräts verbindbar, während ein zweiter Anschluß des vierten Anschlußpaars mit der zweiten Empfangseinheit des ausgewählten Kommunikationsgeräts verbindbar ist.

Darüber hinaus umfaßt das erfindungsgemäße Schaltgerät zumindest zwei Verbindungselemente. Dabei sind der erste Anschluß des ersten Anschlußpaars und der zweite Anschluß des dritten Anschlußpaars durch ein erstes Verbindungselement verbunden, während der erste Anschluß des zweiten Anschlußpaars und der zweite Anschluß des vierten Anschlußpaars durch ein zweites Verbindungselement verbunden sind. Des weiteren sind der zweite Anschluß des ersten Anschlußpaars und der erste Anschluß des dritten Anschlußpaars in einem ersten Schaltgerätzustand durch ein erstes Schaltelement verbunden. Im ersten Schaltgerätzustand sind außerdem der zweite Anschluß des zweiten Anschlußpaars und der erste Anschluß des vierten Anschlußpaars durch ein zweites Schaltelement verbunden. Ferner sind der erste Anschluß des ersten Anschlußpaars und der zweite Anschluß des zweiten Anschlußpaars durch ein drittes Schaltelement in einem zweiten Schaltgerätzustand verbunden. Im zweiten Schaltgerätzustand sind darüber hinaus der zweite Anschluß des ersten Anschlußpaars und der erste Anschluß des zweiten Anschlußpaars durch ein viertes Schaltelement verbunden.

Das erfindungsgemäße Schaltgerät ermöglicht ein stoßfreies Zuschalten eines zuvor abgeschalteten Kommunikationsgeräts innerhalb eines industriellen Kommunikationsnetzes mit einer Ringtopologie. Im zweiten Schaltgerätezustand kann das ausgewählte Kommunikationsgerät nämlich innerhalb des industriellen Kommunikationsnetzes versendete Topologieinformationen empfangen bzw. das Schaltgerät und das ausgewählte Kommunikationsgerät sind hierfür eingerichtet. Anhand der während des zweiten Schaltgerätezustands empfangenen Topologieinformationen kann das ausgewählte Kommunikationsgerät für ein Wiederzuschalten in das industrielle Kommunikationsnetz konfiguriert werden. Vorteilhafterweise ist das ausgewählte Kommunikationsgerät hierfür entsprechend eingerichtet. Insgesamt können auf diese Weise Wiederzuschaltvorgänge deutlich verkürzt werden, so daß es beispielsweise nicht mehr zu Fehlermeldungen eines Redundanz-Managers oder einer Redundanzbehandlungseinheit kommt.

Entsprechend einer bevorzugten Ausgestaltung des erfindungsgemäßen Schaltgeräts ist der erste Schaltgerätzustand ein Normalbetriebszustand, während der zweite Schaltgerätzustand ein Umgehungsbetriebszustand ist. Im Umgehungsbetriebszustand sind das erste und zweite Schaltelement geöffnet, während im Normalbetriebszustand das dritte und vierte Schaltelement geöffnet sind. Vorzugsweise sind das erste und zweite Schaltelement im Normalbetriebszustand geschlossen, während das dritte und vierte Schaltelement im Umgehungsbetriebszustand geschlossen sind. Dies ermöglicht eine einfache und zuverlässige Realisierung eines Schaltgeräts für ein stoßfreies Wiederzuschalten eines zuvor von einem Kommunikationsnetz abgeschalteten Kommunikationsgeräts.

Mit den Schaltelementen ist entsprechend einer vorteilhaften Weiterbildung des erfindungsgemäßen Schaltgeräts eine durch das ausgewählte Kommunikationsgerät ansteuerbare Steuerungseinheit verbunden. Steuerungseinheit ist für ein Öffnen bzw. Schließen der Schaltelemente entsprechend dem Normalbetriebszustand bzw. entsprechend dem Umgehungsbetriebszustand eingerichtet ist. Dies ermöglicht beispielsweise ein automatisches Umschalten des Schaltgeräts, wenn das ausgewählte Kommunikationsgerät gewartet wird. Dabei kann das Schaltgerät als Vorschaltgerät für das ausgewählte Kommunikationsgerät ausgebildet oder in dieses integriert sein. Dies ermöglicht einerseits eine Realisierung von Nachrüstlösungen und andererseits eine platzsparende sowie kostengünstige Ausführung.

Das erfindungsgemäße redundant betreibbare industrielle Kommunikationsnetz umfaßt eine Mehrzahl von über Netzwerkverbindungen innerhalb einer Ringtopologie miteinander verbundenen Kommunikationsgeräten. Die Kommunikationsgeräte weisen jeweils eine erste und eine zweite Sende- und Empfangseinheit sowie ein mit diesen verbundenes Koppelelement auf. Des weiteren sind an die Kommunikationsgeräte jeweils eine erste und zweite Netzverbindung angeschlossen. Dabei ist den Sende- und Empfangseinheiten jeweils ein Anschluß an einem Kommunikationsgerät zugeordnet. Zumindest einem ausgewählten Kommunikationsgerät ist ein Schaltgerät zugeordneten, das entsprechend vorangehenden Ausführungen ausgestaltet ist. Vorzugsweise ist allen über Netzwerkverbindungen innerhalb der Ringtopologie miteinander verbundenen Kommunikationsgeräten jeweils ein entsprechendes Schaltgerät zugeordnet.

Darüber hinaus umfaßt das erfindungsgemäße redundant betreibbare industrielle Kommunikationsnetz eine Überwachungs- und Steuerungseinheit, die für eine Detektion einer Unterbrechung innerhalb der Ringtopologie anhand versendeter Test-Datenpakete eingerichtet ist und beispielsweise ein Redundanz-Manager sein kann. Außerdem ist die Überwachungs- und Steuerungseinheit für eine Steuerung einer Weiterleitung von Datenpaketen mit Nutzdaten, die an einen ersten Anschluß eines der Überwachungs- und Steuerungseinheit zugeordneten Kommunikationsgeräts innerhalb der Ringtopologie gerichtet sind, an einen zweiten Anschluß des der Überwachungs- und Steuerungseinheit zugeordneten Kommunikationsgeräts eingerichtet. Innerhalb des erfindungsgemäßen redundant betreibbaren industriellen Kommunikationsnetzes ist ein stoßfreies Zuschalten eines zuvor abgeschalteten Kommunikationsgeräts möglich.

Entsprechend dem erfindungsgemäßen Verfahren zum redundanten Betrieb eines industriellen Kommunikationsnetzes, das entsprechend vorangehenden Ausführungen ausgestaltet ist, werden durch ein ausgewähltes Kommunikationsgerät, dem ein entsprechend vorangehenden Ausführungen ausgestaltetes Schaltgerät zugeordnet ist, das in einen Umgehungsbetriebszustand versetzt ist, innerhalb des industriellen Kommunikationsnetzes versendete Topologieinformationen während des Umgehungsbetriebszustands empfangen. Das ausgewählte Kommunikationsgerät wird anhand der während des Umgehungsbetriebszustands des zugeordneten Schaltgeräts empfangenen Topologieinformationen für ein Wiederzuschalten in das industrielle Kommunikationsnetz konfiguriert. Dies ermöglicht ein hinreichend schnelles Wiederzuschalten eines zuvor abgeschalteten Kommunikationsgeräts, beispielsweise eines Switchs.

Die vorliegende Erfindung wird nachfolgend an einem Ausführungsbeispiel anhand der Zeichnung näher erläutert. Es zeigt
- Figur 1: eine Anordnung mit drei Switches, von denen ein Switch ein in einem Umgehungsbetriebszustand versetztes Bypass-Relais aufweist,
- Figur 2: die Anordnung entsprechend Figur 1, bei der das Bypass-Relais in einen Normalbetriebszustand versetzt ist,
- Figur 3: eine gegenüber Figur 1 abgewandelte Anordnung, bei der jedem Switch ein vorgeschaltetes Bypass-Relais zugeordnet ist.

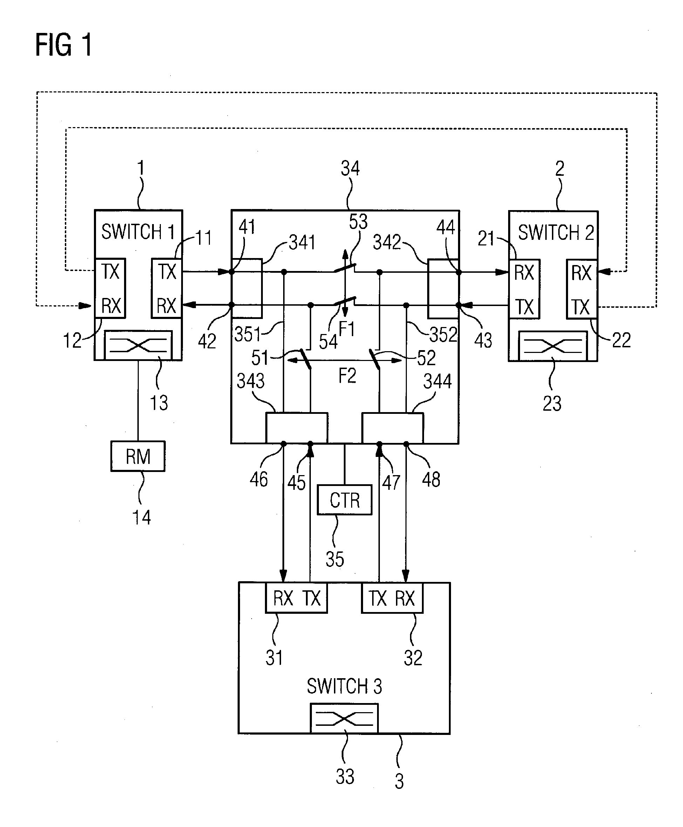

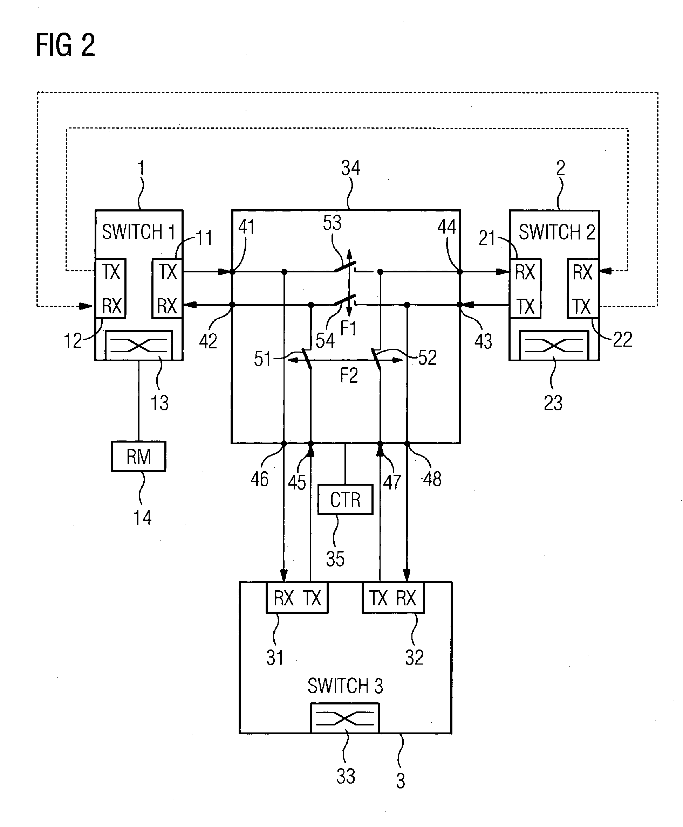

In Figur 1 und 2 ist eine Anordnung mit drei Switches 1-3 eines redundant betreibbaren industriellen Kommunikationsnetzes dargestellt, die über Netzwerkverbindungen innerhalb einer Linien- oder Ringtopologie miteinander verbunden sind. Die Ringtopologie ist in Figur 1 und 2 gestrichelt angedeutet. Die Switches 1-3 weisen die jeweils eine erste 11, 21, 31 und eine zweite Sende- und Empfangseinheit 12, 22, 32 sowie ein mit diesen verbundenes Koppelelement 13, 23, 33 auf. An die Switches 1-3 sind jeweils eine erste und zweite Netzverbindung angeschlossen, wobei den Sende- und Empfangseinheiten 11-12, 21-22, 31-32 jeweils ein Anschluß an einem Switch 1-3 zugeordnet ist. Entsprechend Figur 1 und 2 ist einem ausgewählten Switch 3 ein Bypass-Relais 34 zugeordnet, das insgesamt vier Anschlußpaare 341-344, zwei feste Verbindungselemente 351-352 und vier Schaltelemente 51-54 umfaßt. Das Bypass-Relais 34 ist im vorliegenden Ausführungsbeispiel als Vorschaltgerät für den ausgewählten Switch 3 ausgebildet.

Ein erstes Anschlußpaar 341 des Bypass-Relais 34 ist über eine erste Netzwerkverbindung mit der ersten Sende- und Empfangseinheit 11 eines ersten weiteren Switchs 1 verbunden. Dabei ist ein erster Anschluß 41 des ersten Anschlußpaars 341 mit der ersten Sendeeinheit (TX) des ersten weiteren Switchs 1 verbunden, während ein zweiter Anschluß 42 des ersten Anschlußpaars 341 mit der ersten Empfangseinheit (RX) des ersten weiteren Switchs 1 verbunden ist.

In entsprechender Weise ist ein zweites Anschlußpaar 342 über eine zweite Netzwerkverbindung mit der ersten Sende- und Empfangseinheit 21 eines zweiten weiteren Switchs 2 verbunden. Dabei ist ein erster Anschluß 43 des zweiten Anschlußpaars 342 mit der ersten Sendeeinheit (TX) des zweiten weiteren Switchs 2 verbunden, während ein zweiter Anschluß 44 des zweiten Anschlußpaars 342 mit der ersten Empfangseinheit (RX) des zweiten weiteren Switchs 2 verbunden ist.

Ein drittes Anschlußpaar 343 des Bypass-Relais 34 ist über eine dritte Netzwerkverbindung mit der ersten Sende- und Empfangseinheit 31 des ausgewählten Switchs 3 verbunden. Dabei ist ein erster Anschluß 45 des dritten Anschlußpaars 343 mit der ersten Sendeeinheit (TX) des ausgewählten Switchs 3 verbunden, während ein zweiter Anschluß 46 des dritten Anschlußpaars 343 mit der ersten Empfangseinheit (RX) des ausgewählten Switchs 3 verbunden ist.

In entsprechender Weise ist ein viertes Anschlußpaar 344 über eine vierte Netzwerkverbindung mit der zweiten Sende- und Empfangseinheit 32 des ausgewählten Switchs 3 verbunden. Dabei ist ein erster Anschluß 47 des vierten Anschlußpaars 344 mit der zweiten Sendeeinheit (TX) des ausgewählten Switchs 3 verbunden, während ein zweiter Anschluß 48 des vierten Anschlußpaars 344 mit der zweiten Empfangseinheit (RX) des ausgewählten Switchs 3 verbunden ist.

Der erste Anschluß 41 des ersten Anschlußpaars 341 und der zweite Anschluß 46 des dritten Anschlußpaars 343 sind durch ein erstes Verbindungselement 351 verbunden. Dementsprechend sind der erste Anschluß 43 des zweiten Anschlußpaars 342 und der zweite Anschluß 48 des vierten Anschlußpaars 344 durch ein zweites Verbindungselement 352 verbunden.

Des weiteren sind der zweite Anschluß 42 des ersten Anschlußpaars 341 und der erste Anschluß 45 des dritten Anschlußpaars 343 in einem Normalbetriebszustand des Bypass-Relais 34 durch ein erstes Schaltelement 51 verbunden. In entsprechender Weise sind der zweite Anschluß 44 des zweiten Anschlußpaars 342 und der erste Anschluß 47 des vierten Anschlußpaars 344 im Normalbetriebszustand durch ein zweites Schaltelement 52 verbunden. In einem Umgehungsbetriebszustand des Bypass-Relais 34 sind der erste Anschluß 41 des ersten Anschlußpaars 341 und der zweite Anschluß 44 des zweiten Anschlußpaars 342 durch ein drittes Schaltelement 53 verbunden. Analog dazu sind der zweite Anschluß 42 des ersten Anschlußpaars 341 und der erste Anschluß 43 des zweiten Anschlußpaars 342 im Umgehungsbetriebszustand durch ein viertes Schaltelement 54 verbunden. Das erste 51 und zweite Schaltelement 52 einerseits sowie das dritte 53 und vierte Schaltelement 54 andererseits sind zu einer ersten (F1) bzw. zweiten Schaltergruppe (F2) mit parallel betätigten Schaltelementen zusammengefaßt.

Entsprechend Figur 1 sind das erste 51 und zweite Schaltelement 52 im Umgehungsbetriebszustand geöffnet, während das dritte 53 und vierte Schaltelement 54 geschlossen sind. Nach einem Umschalten des Bypass-Relais 34 sind das erste 51 und zweite Schaltelement 52 im Normalbetriebszustand entsprechend Figur 2 geschlossen, während das dritte 53 und vierte Schaltelement 54 geöffnet sind. Mit den Schaltelementen 51-54 ist im vorliegenden Ausführungsbeispiel eine durch den ausgewählten Switch 3 ansteuerbare Steuerungseinheit 35 verbunden, durch die ein Öffnen bzw. Schließen der Schaltelemente 51-54 entsprechend dem Normalbetriebszustand bzw. Umgehungsbetriebszustand gesteuert wird.

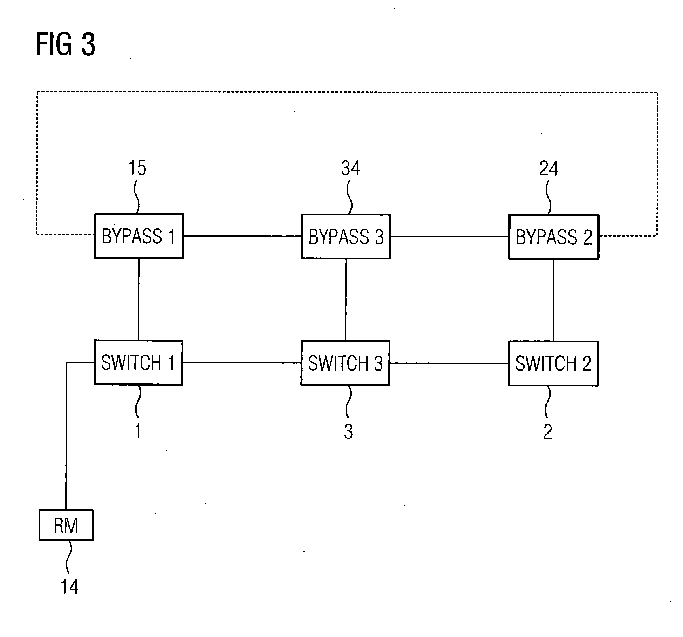

Mit dem vorgeschalteten Bypass-Relais 34 kann der ausgewählte Switch 3 auch während des Umgehungsbetriebszustands des Bypass-Relais 34 innerhalb des industriellen Kommunikationsnetzes versendete Topologieinformationen empfangen. Anhand der während des Umgehungsbetriebszustands empfangenen Topologieinformationen wird der ausgewählte Switch 3 für ein Wiederzuschalten in das industrielle Kommunikationsnetz vorab konfiguriert. Damit erfolgt das Wiederzuschalten des ausgewählten Switchs 3 im wesentlichen stoßfrei. Entsprechend dem in Figur 3 dargestellten Ausführungsbeispiel können auch dem ersten 1 und zweiten weiteren Switch 2 Bypass-Relais 15, 24 zugeordnet sein, die wie das Bypass-Relais 34 des ausgewählten Switchs ausgestaltet sind.

Dem ersten weiteren Switch 1 ist im vorliegenden Ausführungsbeispiel ein Redundanz-Manager 14 zugeordnet, der eine Unterbrechung innerhalb der Ringtopologie anhand versendeter Test-Datenpakete detektiert und eine Weiterleitung von Datenpaketen mit Nutzdaten, die durch die erste Sende- und Empfangseinheit 11 des ersten weiteren Switchs 1 empfangen werden, an die zweite Sende- und Empfangseinheit 12 des ersten weiteren Switchs 1 steuert. Dies erfolgt beispielsweise entsprechend Media Redundancy Protocol.

## Patentansprüche

1. Schaltgerät für ein ausgewähltes Kommunikationsgerät eines redundant betreibbaren industriellen Kommunikationsnetzes, wobei das ausgewählte Kommunikationsgerät zumindest eine erste und zweite Sende- und Empfangseinheit sowie ein Koppelelement umfaßt, mit
- einem ersten Anschlußpaar (341), das über eine erste Netzwerkverbindung mit einer Sende- und Empfangseinheit eines ersten weiteren Kommunikationsgeräts (1) verbindbar ist, wobei ein erster Anschluß des ersten Anschlußpaars mit der Sendeeinheit des ersten weiteren Kommunikationsgeräts verbindbar ist, und wobei ein zweiter Anschluß des ersten Anschlußpaars mit der Empfangseinheit des ersten weiteren Kommunikationsgeräts verbindbar ist,
- einem zweiten Anschlußpaar (342), das über eine zweite Netzwerkverbindung mit einer Sende- und Empfangseinheit eines zweiten weiteren Kommunikationsgeräts (2) verbindbar ist, wobei ein erster Anschluß des zweiten Anschlußpaars mit der Sendeeinheit des zweiten weiteren Kommunikationsgeräts verbindbar ist, und wobei ein zweiter Anschluß des zweiten Anschlußpaars mit der Empfangseinheit des zweiten weiteren Kommunikationsgeräts verbindbar ist,
- einem dritten Anschlußpaar (343), das über eine dritte Netzwerkverbindung mit der ersten Sende- und Empfangseinheit (31) des ausgewählten Kommunikationsgeräts (3) verbindbar ist, wobei ein erster Anschluß des dritten Anschlußpaars mit der ersten Sendeeinheit des ausgewählten Kommunikationsgeräts verbindbar ist, und wobei ein zweiter Anschluß des dritten Anschlußpaars mit der ersten Empfangseinheit des ausgewählten Kommunikationsgeräts verbindbar ist,
- einem vierten Anschlußpaar (344), das über eine vierte Netzwerkverbindung mit der zweiten Sende- und Empfangseinheit (32) des ausgewählten Kommunikationsgeräts (3) verbindbar ist, wobei ein erster Anschluß des vierten Anschlußpaars mit der zweiten Sendeeinheit des ausgewählten Kommunikationsgeräts verbindbar ist, und wobei ein zweiter Anschluß des vierten Anschlußpaars mit der zweiten Empfangseinheit des ausgewählten Kommunikationsgeräts verbindbar ist, **dadurch gekennzeichnet dass** das Koppelelement weiter umfaßt:
- zumindest zwei festen Verbindungselementen, wobei der erste Anschluß (41) des ersten Anschlußpaars und der zweite Anschluß (46) des dritten Anschlußpaars durch ein erstes Verbindungselement (351) verbunden sind, und wobei der erste Anschluß des zweiten Anschlußpaars (43) und der zweite Anschluß (48) des vierten Anschlußpaars durch ein zweites Verbindungselement (352) verbunden sind,
- zumindest vier Schaltelementen, wobei der zweite Anschluß (42) des ersten Anschlußpaars und der erste Anschluß (45) des dritten Anschlußpaars durch ein erstes Schaltelement (51) nur in einem ersten Schaltgerätzustand verbunden sind, und wobei der zweite Anschluß (44) des zweiten Anschlußpaars und der erste Anschluß (47) des vierten Anschlußpaars durch ein zweites Schaltelement (52) nur im ersten Schaltgerätzustand verbunden sind, und wobei der erste Anschluß (41) des ersten Anschlußpaars und der zweite Anschluß (44) des zweiten Anschlußpaars durch ein drittes Schaltelement (53) nur in einem zweiten Schaltgerätzustand verbunden sind, und wobei der zweite Anschluß (42) des ersten Anschlußpaars und der erste Anschluß (43) des zweiten Anschlußpaars durch ein viertes Schaltelement (52) nur im zweiten Schaltgerätzustand verbunden sind.

2. Schaltgerät nach Anspruch 1,
bei dem der erste Schaltgerätzustand ein Normalbetriebszustand ist, und bei dem der zweite Schaltgerätzustand ein Umgehungsbetriebszustand ist, und bei dem das erste und zweite Schaltelement im Umgehungsbetriebszustand geöffnet sind, und bei dem das dritte und vierte Schaltelement im Normalbetriebszustand geöffnet sind.

3. Schaltgerät nach Anspruch 2,
bei dem das erste und zweite Schaltelement im Normalbetriebszustand geschlossen sind, und bei dem das dritte und vierte Schaltelement im Umgehungsbetriebszustand geschlossen sind.

4. Schaltgerät nach einem der Ansprüche 2 oder 3,
bei dem mit den Schaltelementen (51-54) eine durch das ausgewählte Kommunikationsgerät (3) ansteuerbare SteuerUngseinheit (35) verbunden ist, die für ein Öffnen und/oder Schließen der Schaltelemente entsprechend dem Normalbetriebszustand und/oder entsprechend dem Umgehungsbetriebszustand eingerichtet ist.

5. Schaltgerät nach einem der Ansprüche 1 bis 4,
bei dem das Schaltgerät als Vorschaltgerät für das ausgewählte Kommunikationsgerät ausgebildet ist.

6. Schaltgerät nach einem der Ansprüche 1 bis 4,
bei dem das Schaltgerät in das ausgewählte Kommunikationsgerät integriert ist.

7. Schaltgerät nach einem der Ansprüche 1 bis 6,
bei dem das ausgewählte Kommunikationsgerät ein Switch ist.

8. Schaltgerät nach Anspruch 7,
bei dem das erste und/oder zweite weitere Kommunikationsgerät ein Switch ist.

9. Redundant betreibbares industrielles Kommunikationsnetz mit
- einer Mehrzahl von über Netzwerkverbindungen innerhalb einer Ringtopologie miteinander verbundenen Kommunikationsgeräten, die jeweils eine erste (11, 21, 31) und eine zweite Sende- und Empfangseinheit (12, 22, 32) sowie ein mit diesen verbundenes Koppelelement (13, 23, 33) aufweisen, und an die jeweils eine erste und zweite Netzverbindung angeschlossen sind, wobei den Sende- und Empfangseinheiten jeweils ein Anschluß an einem Kommunikationsgerät zugeordnet ist,
- zumindest einem ausgewählten Kommunikationsgerät (3) zugeordneten Schaltgerät (34), das entsprechend einem der Ansprüche 1 bis 8 ausgestaltet ist,
- einer Überwachungs- und Steuerungseinheit (14), die für eine Detektion einer Unterbrechung innerhalb der Ringtopologie anhand versendeter Test-Datenpakete und für eine Steuerung einer Weiterleitung von Datenpaketen mit Nutzdaten, die an einen ersten Anschluß (11) eines der Überwachungs- und Steuerungseinheit zugeordneten Kommunikationsgeräts (1) innerhalb der Ringtopologie gerichtet sind, an einen zweiten Anschluß (12) des der Überwachungs- und Steuerungseinheit zugeordneten Kommunikationsgeräts eingerichtet ist.

10. Kommunikationsnetz nach Anspruch 9,
bei dem die Überwachungs- und Steuerungseinheit ein Redundanz-Manager ist.

## Claims

1. Switching device for a selected communication device of an industrial communication network which can be operated in a redundant manner, the selected communication device comprising at least one first and one second transmitting and receiving unit and a coupling element, having
- a first connection pair (341) which can be connected to a transmitting and receiving unit of a first further communication device (1) via a first network connection, a first connection of the first connection pair being able to be connected to the transmitting unit of the first further communication device, and a second connection of the first connection pair being able to be connected to the receiving unit of the first further communication device,
- a second connection pair (342) which can be connected to a transmitting and receiving unit of a second further communication device (2) via a second network connection, a first connection of the second connection pair being able to be connected to the transmitting unit of the second further communication device, and a second connection of the second connection pair being able to be connected to the receiving unit of the second further communication device,
- a third connection pair (343) which can be connected to the first transmitting and receiving unit (31) of the selected communication device (3) via a third network connection, a first connection of the third connection pair being able to be connected to the first transmitting unit of the selected communication device, and a second connection of the third connection pair being able to be connected to the first receiving unit of the selected communication device,
- a fourth connection pair (344) which can be connected to the second transmitting and receiving unit (32) of the selected communication device (3) via a fourth network connection, a first connection of the fourth connection pair being able to be connected to the second transmitting unit of the selected communication device, and a second connection of the fourth connection pair being able to be connected to the second receiving unit of the selected communication device, **characterized in that** the coupling element also comprises:
- at least two fixed connection elements, the first connection (41) of the first connection pair and the second connection (46) of the third connection pair being connected by means of a first connection element (351), and the first connection of the second connection pair (43) and the second connection (48) of the fourth connection pair being connected by means of a second connection element (352),
- at least four switching elements, the second connection (42) of the first connection pair and the first connection (45) of the third connection pair being connected by means of a first switching element (51) only in a first switching device state, and the second connection (44) of the second connection pair and the first connection (47) of the fourth connection pair being connected by means of a second switching element (52) only in the first switching device state, and the first connection (41) of the first connection pair and the second connection (44) of the second connection pair being connected by means of a third switching element (53) only in a second switching device state, and the second connection (42) of the first connection pair and the first connection (43) of the second connection pair being connected by means of a fourth switching element (52) only in the second switching device state.

2. Switching device according to Claim 1,
in which the first switching device state is a normal operating state, and in which the second switching device state is a circumvention operating state, and in which the first and second switching elements are open in the circumvention operating state, and in which the third and fourth switching elements are open in the normal operating state.

3. Switching device according to Claim 2,
in which the first and second switching elements are closed in the normal operating state, and in which the third and fourth switching elements are closed in the circumvention operating state.

4. Switching device according to either of Claims 2 and 3,
in which a control unit (35) which can be controlled by the selected communication device (3) and is set up to open and/or close the switching elements according to the normal operating state and/or according to the circumvention operating state is connected to the switching elements (51-54).

5. Switching device according to one of Claims 1 to 4,
in which the switching device is in the form of a ballast for the selected communication device.

6. Switching device according to one of Claims 1 to 4,
in which the switching device is integrated in the selected communication device.

7. Switching device according to one of Claims 1 to 6,
in which the selected communication device is a switch.

8. Switching device according to Claim 7,
in which the first and/or second further communication device is/are a switch.

9. Industrial communication network which can be operated in a redundant manner, having
- a plurality of communication devices which are connected to one another within a ring topology via network connections, each have a first transmitting and receiving unit (11, 21, 31) and a second transmitting and receiving unit (12, 22, 32) and a coupling element (13, 23, 33) connected thereto, and to which a first and a second network connection are respectively connected, a connection on a communication device respectively being assigned to the transmitting and receiving units,
- at least one switching device (34) which is assigned to the selected communication device (3) and is configured according to one of Claims 1 to 8,
- a monitoring and control unit (14) which is set up to detect an interruption inside the ring topology on the basis of transmitted test data packets and to control forwarding of data packets containing useful data, which are addressed to a first connection (11) of a communication device (1) assigned to the monitoring and control unit inside the ring topology, to a second connection (12) of the communication device assigned to the monitoring and control unit.

10. Communication network according to Claim 9,
in which the monitoring and control unit is a redundancy manager.

## Revendications

1. Appareil de commutation pour un appareil de communication sélectionné d'un réseau de communication industriel, pouvant fonctionner de manière redondante, dans lequel l'appareil de communication sélectionné comprend au moins une première et une deuxième unités d'émission et de réception ainsi qu'un élément de couplage, comprenant
- une première paire ( 341 ) de bornes, qui peut, par une liaison de réseau, être reliée à une unité d'émission et de réception d'un autre premier appareil ( 1 ) de communication, une première borne de la première paire de bornes pouvant être reliée à l'unité d'émission de l'autre premier appareil de communication et une deuxième borne de la première paire de bornes pouvant être reliée à l'unité de réception de l'autre premier appareil de communication,
- une deuxième paire ( 342 ) de bornes, qui peut, par une deuxième liaison de réseau, être reliée à une unité d'émission et de réception d'un autre deuxième appareil ( 2 ) de communication, une première borne de la deuxième paire de bornes pouvant être reliée à l'unité d'émission de l'autre deuxième appareil de communication et une deuxième borne de la deuxième paire de bornes pouvant être reliée à l'unité de réception de l'autre deuxième appareil de communication,
- une troisième paire ( 343 ) de bornes, qui peut, par une troisième liaison de réseau, être reliée à la première unité ( 31 ) d'émission et de réception de l'appareil ( 3 ) de communication sélectionné, une première borne de la troisième paire de bornes pouvant être reliée à la première unité d'émission de l'appareil de communication sélectionné et une deuxième borne de la troisième paire de bornes pouvant être reliée à la première unité de réception de l'appareil de communication sélectionné,
- une quatrième paire ( 344 ) de bornes, qui peut, par une quatrième liaison de réseau, être reliée à la deuxième unité ( 32 ) d'émission et de réception de l'appareil ( 3 ) de communication sélectionné, une première borne de la quatrième paire de bornes pouvant être reliée à la deuxième unité d'émission de l'appareil de communication sélectionné et une deuxième borne de la quatrième paire de bornes pouvant être reliée à la deuxième unité de réception de l'appareil de communication sélectionné, **caractérisé en ce que** l'élément de couplage comprend en outre :
- au moins deux éléments de liaison fixes, la première borne ( 41 ) de la première paire de bornes et la deuxième borne ( 46 ) de la troisième paire de bornes étant reliées par un premier élément ( 351 ) de liaison et la première borne de la deuxième paire ( 43 ) de bornes et la deuxième borne ( 48 ) de la quatrième paire de bornes étant reliées par un deuxième élément ( 352 ) de liaison,
- au moins quatre éléments de commutation, la deuxième borne ( 42 ) de la première paire de bornes et la première borne ( 45 ) de la troisième paire de bornes étant reliées par un premier élément ( 51 ) de commutation, seulement dans un premier état de l'appareil de commutation, et la deuxième borne ( 44 ) de la deuxième paire de bornes et la première borne ( 47 ) de la quatrième paire de bornes étant reliées par un deuxième élément ( 52 ) de commutation, seulement dans le premier état de l'appareil de commutation, et la première borne ( 41 ) de la première paire de bornes et la deuxième borne ( 44 ) de la deuxième paire de bornes étant reliées par un troisième élément ( 53 ) de commutation, seulement dans un deuxième état de l'appareil de commutation, et la deuxième borne ( 42 ) de la première paire de bornes et la première borne ( 43 ) de la deuxième paire de bornes étant reliées par un quatrième élément ( 52 ) de commutation, seulement dans le deuxième état de l'appareil de commutation.

2. Appareil de commutation suivant la revendication 1,
dans lequel le premier état de l'appareil de commutation est un état de fonctionnement normal et dans lequel le deuxième état de l'appareil de commutation est un état de fonctionnement passager, et dans lequel le premier et le deuxième éléments de commutation sont ouverts dans l'état de fonctionnement passager, et dans lequel le troisième et le quatrième éléments de commutation sont ouverts dans l'état de fonctionnement normal.

3. Appareil de commutation suivant la revendication 2,
dans lequel le premier et le deuxième éléments de commutation sont fermés dans l'état de fonctionnement normal et dans lequel le troisième et le quatrième éléments de commutation sont fermés dans l'état de fonctionnement passager.

4. Appareil de commutation suivant l'une des revendications 2 ou 3,
dans lequel, aux éléments ( 51-54 ) de commutation, est reliée une unité ( 35 ) de commande, qui peut être commandée par l'appareil ( 3 ) de communication sélectionné et qui est conçue pour une ouverture et/ou une fermeture des éléments de commutation, conformément à l'état de fonctionnement normal et/ou conformément à l'état de fonctionnement passager.

5. Appareil de commutation suivant l'une des revendications 1 à 4,
dans lequel l'appareil de commutation est constitué en ballast pour l'appareil de communication sélectionné.

6. Appareil de commutation suivant l'une des revendications 1 à 4,
dans lequel l'appareil de commutation est intégré dans l'appareil de communication sélectionné.

7. Appareil de commutation suivant l'une des revendications 1 à 6,
dans lequel l'appareil de communication sélectionné est un commutateur.

8. Appareil de commutation suivant la revendication 7,
dans lequel l'autre premier et/ou deuxième appareil(s) de communication est un commutateur.

9. Réseau de communication industriel pouvant fonctionner de manière redondante, comprenant
- une multiplicité d'appareils de communication reliés entre eux dans une topologie en anneau par des liaisons de réseau, ayant respectivement une première ( 11, 21, 31 ) et une deuxième unités ( 12, 22, 32 ) d'émission et de réception ainsi qu'un élément ( 13, 23, 33 ) de couplage qui leur est relié, et auxquels sont raccordées respectivement une première et une deuxième liaisons de réseau, une borne de l'appareil de communication étant associée respectivement aux unités d'émission et de réception,
- au moins un appareil ( 34 ) de commutation associé à un appareil ( 3 ) de communication sélectionné et conformé conformément à l'une des revendications 1 à 8,
- une unité ( 14 ) de contrôle et de commande, qui est conçue pour une détection d'une interruption au sein de la topologie en anneau, au moyen de paquets de données de test envoyés et pour une commande d'un acheminement de paquets de données ayant des paquets utiles, qui sont dirigés au sein de la topologie en anneau sur une première borne ( 11 ) d'un appareil ( 1 ) de communication associée à l'unité de contrôle et de commande, sur une deuxième borne ( 12 ) de l'appareil de communication associée à l'unité de contrôle et de commande.

10. Réseau de communication suivant la revendication 9,
dans lequel l'unité de commande et de contrôle est un gestionnaire à redondance.
